# EUROPÄISCHE PATENTSCHRIFT

(11) **EP 2 545 009 B1**
(45) Veröffentlichungstag und Bekanntmachung des Hinweises auf die Patenterteilung: **04.11.2015**
(21) Anmeldenummer: 11709673.5
(22) Anmeldetag: 10.03.2011
(51) Int. Cl.: C03B 37/012, C03B 37/027, C03C 13/04, G02B 6/036

(54) **VERFAHREN SOWIE ROHRFÖRMIGES HALBZEUG ZUR HERSTELLUNG EINER OPTISCHEN FASER**
PROCESS AND TUBULAR PREFORM FOR MANUFACTURING AN OPTICAL FIBRE
PROCÉDÉ ET PRÉFORME POUR LA FABRCIATION D'UNE FIBRE OPTIQUE

(30) Priorität: 10.03.2010 DE 102010010968
(43) Veröffentlichungstag der Anmeldung: 16.01.2013
(73) Patentinhaber: Heraeus Quarzglas GmbH & Co. KG, 63450 Hanau (DE)
(72) Erfinder: SATTMANN, Ralph, 63739 Aschaffenburg (DE); VYDRA, Jan, 63456 Hanau (DE); HUENERMANN, Michael, 63755 Alzenau (DE)
(74) Vertreter: Staudt, Armin Walter
(86) Internationale Anmeldenummer: PCT/EP2011/053590
(87) Internationale Veröffentlichungsnummer: WO 2011/110617

(56) Entgegenhaltungen:
- WO-A1-2010/003856
- DE-C1- 10 155 134
- JP-A- 9 048 629
- JP-A- 61 262 708
- JP-A- 2001 253 726
- US-A- 3 981 707
- US-B1- 6 223 563
- US-B1- 6 263 706

## Beschreibung

Die Erfindung betrifft ein Verfahren zur Herstellung einer optischen Faser durch Elongieren einer Quarzglas-Vorform oder eines koaxialen Ensembles von Quarzglas-Bauteilen, wobei die Faser eine Kernzone mit einem Brechungsindex n_{K}, eine die Kernzone umhüllende innere Mantelzone mit einem Brechungsindex n_{Mi}, eine die innere Mantelzone umgebende Ringzone aus dotierten Quarzglas mit einem Brechungsindex n_{F} sowie eine die Ringzone umgebende äußere Mantelzone aufweist, wobei gilt: n_{F} < n_{Mi} < n_{K}.

Weiterhin betrifft die Erfindung ein rohrförmiges Halbzeug zur Herstellung einer optischen Faser.

### Stand der Technik

Die Dämpfung des in einer optischen Faser geführten Lichtsignals hängt unteranderem von Biegungen der Faser ab. Kleine Biegeradien bewirken eine höhere optische Dämpfung. Der Signalverlust kann durch Einsatz biegeunempfindlicher optischer Fasern verringert werden. Derartige Fasern sind seit vielen Jahren bekannt und geraten im Zuge der Verlegung von Glasfasernetzen bis in die Wohnung (fiber-to-the-home; FTTH) zunehmend ins Blickfeld. Bei dieser Anwendung sind häufig wegen räumlicher Beschränkungen und ästhetischer Ansprüche besonders kleine Biegeradien erwünscht.

Eine derartige biegeunempfindliche optische Faser ist in der WO 2010/003856 A1 beschrieben, aus der auch ein Herstellungsverfahren für die Faser gemäß der eingangs genannten Gattung bekannt ist. Die biegeunempfindliche optische Faser weist eine Kernzone mit einem Brechungsindex n_{K}, einen die Kernzone umhüllende Mantelzone mit einem Brechungsindex n_{Mi}, eine die Mantelzone umgebende Ringzone aus einem mit Fluor dotierten Quarzglas mit einem Brechungsindex n_{F} und eine die Ringzone umgebende Außenschicht aus undotiertem Quarzglas mit einem Brechungsindex n_{Ma} auf, so dass sich ein radiales Brechzahlprofil ergibt, für das gilt: n_{Ma} > n_{F} < n_{Mi} < n_{K}. Die Faser wird durch Elongieren einer Quarzglas-Vorform oder eines koaxialen Ensembles von Quarzglas-Bauteilen erhalten, wobei das Quarzglas der Ringzone in einem Plasma-Außenabscheideprozess erzeugt wird, indem auf einem rohrförmigen oder stabförmigen Substratkörper eine Ringzonenschicht aus dem mit Fluor dotierten Quarzglas mit einer Schichtdicke von mindestens 1 mm und einer Brechzahl n_{F} ≤ 1,4519 erzeugt wird.

Im Hinblick auf die Wirtschaftlichkeit des Herstellungsverfahrens und auf die Minimierung des Risikos von Ausschuss ist es vorteilhaft, wenn die einzelnen Bestandteile der Faser in separaten Verfahrensschritten hergestellt und erst abschließend zusammengefügt werden.

Ein derartiges Verfahren ist in der EP 1 712 934 A1 beschrieben, aus der auch ein Halbzeug gemäß der eingangs genannten Gattung bekannt ist. Zur Herstellung einer großvolumigen Vorform wird ein Halbzeug angegeben, das sich ausschließlich aus einer Anzahl rohr- beziehungsweise stabförmiger Einzelelemente zusammensetzt. Bei den Einzelelementen handelt es sich dabei um einen Kernstab, der aus stoßweiße übereinander liegenden Segmenten zusammengefügt ist und der innerhalb eines inneren Mantelrohres angeordnet ist. Das innere Mantelrohr ist von einem äußeren Mantelrohr umgeben. Die Bauteile werden koaxial zueinander angeordnet und in einem Elongierprozess unmittelbar zu der optischen Faser gezogen.

Hydroxylgruppen und metallische Verunreinigungen wie beispielsweise Chlor, Aluminium oder Eisen können sich auf die optische Transmission der zu ziehenden Faser ungünstig auswirken. Um deren Einfluss zu minimieren, besteht das innere Mantelrohr aus einer hochreinen und teueren Quarzglasqualität. Um andererseits die Kosten für das Halbzeug insgesamt gering zu halten, wird vorgeschlagen, dass das äußere Mantelrohr eine höhere Konzentration an Verunreinigungen aufweist.

Die separate Herstellung der Einzelemente und ihre abschließende Zusammenfügung beim Faserziehprozess tragen zwar zu einer kostengünstigen Herstellung der optischen Fasern und einem verminderten Ausschussrisiko bei. Zwangsläufig ergeben sich dadurch jedoch zusätzliche Oberflächen und Grenzflächen zwischen den zusammenzufügenden Einzelelementen, so dass sich die Grenzflächenproblematik verstärkt und die Anforderungen an die Qualität der Grenzflächen zunehmen. Dabei liegt ein besonders Augenmerk auf der Bildung von Blasen im Bereich der Grenzflächen.

Die DE 10 2008 047 736 B3 beschreibt den Einsatz eines mit Fluor dotierten Quarzglasrohres zum Überfangen eines Kernstabs.

Die US 6,263,706 B1 offenbart ein Verfahren zur Einstellung eines Fluor-Konzentrationsprofils in einem SiO₂-Sootrohr. Bevorzugt wird das Sootrohr nach Entnahme eines Dorns über die Gasphase mit Fluor dotiert, indem entlang der Sootrohr-Außenwandung ein fluorhaltiges Dotiergas und durch die Innenbohrung entweder kein Gas oder Helium geleitet wird. Die erzeugten Brechungsindex-Profile sind im Wesentlichen parabolisch mit einem Maximum in der Rohrmitte.

Die DE 600 04 778 T2 beschreibt die Herstellung von fluordotierten Quarzglas-Körpern über eine Sol-Gel-Route. Die Fluordotierung erfolgt durch Zugabe einer fluorhaltigen Ausgangssubstanz zu dem Sol, vorzugsweise von Tetramethyl-Ammoniumfluorid. Nach dem Sintern zeigen die zylinderförmigen Quarzglasproben Brechungsindex-Verläufe, bei denen der Brechungsindex von außen nach innen abnimmt (und dementsprechend die Fluor-Konzentration von außen nach innen zunimmt). Die höchste Fluor-Konzentration wird im Zentrum erhalten. Die Randabnahme der Fluor-Konzentration wird auf einen Fluorverlust durch Erhitzen zurückgeführt.

Die US 3,981,707 A beschreibt die Herstellung einer optischen Faser durch Kollabieren eines mit Fluor dotierten Quarzglasrohres, das ein inhomogenes radiales Fluor-Konzentrationsprofil aufweist, bei dem die Fluor-Konzentration in der Rohrmitte ein Maximum aufweist und zur Rohr-Innenwandung und zur Rohr-Außenwandung hin abnimmt. Die Fluorverarmung im Bereich der freien Rohroberflächen wird dadurch erzeugt, dass das Rohr aus mit Fluor dotiertem Quarzglas bei hoher Temperatur behandelt wird.

Aus der DE 101 55 134 C1 ist ein Verfahren zur Herstellung einer Vorform bekannt, indem ein Kernstab mit einem vorgegebenen Mantel/Kern-Verhältnis mittels POD-Außenabscheidung in wasserstofffreier Atmosphäre mit einer Sootschicht versehen wird, und die Sootschicht anschließend getrocknet und verglast wird. Im Mantelglas ergibt sich ein Hydroxylgruppengehalt von weniger als 30 Gew.-ppb und eine defektfreie Kontaktfläche zum Kernstab.

### Technische Aufgabenstellung

Der vorliegenden Erfindung liegt die Aufgabe zugrunde, ein Verfahren sowie ein rohrförmiges Halbzeug für die kostengünstige Herstellung einer optischen Faser zur Verfügung zu stellen, die sich durch eine hohe Qualität der Grenzfläche zwischen Kern und Mantel und eine geringe Biegeempfindlichkeit auszeichnet.

### Allgemeine Beschreibung der Erfindung

Hinsichtlich des Herstellungsverfahrens wird diese Aufgabe ausgehend von dem eingangs genannten Verfahren erfindungsgemäß dadurch gelöst, dass das Quarzglas der Ringzone in Form eines Ringzonenrohres aus Quarzglas mit einem mittleren Fluorgehalt von mindestens 6000 Gew.-ppm bereitgestellt wird, das eine von einer Rohr-Innenoberfläche und einer Rohr-Außenoberfläche begrenzte Wandung aufweist, wobei über die Ringzonenrohr-Wandung ein radiales Fluor-Konzentrationsprofil eingestellt wird, das eine innere Fluor-Verarmungsschicht mit einer Schichtdicke von mindestens 1 µm und maximal 10 µm aufweist, in der der Fluorgehalt zur Rohr-Innenoberfläche hin abfällt und in einem oberflächennahen Bereich mit einer Dicke von 1 µm maximal 3000 Gew.-ppm beträgt.

Gemäß der Erfindung wird das Quarzglas für die Ringzone in Form mindestens eines mit Fluor dotierten Quarzglasrohres bereitgestellt, das hier als "Ringzonenrohr" bezeichnet wird.

Ein fluordotiertes Quarzglasrohr wird entweder anhand eines so genannten POD-Verfahrens (Plasma Outside Deposition) erzeugt, indem SiO₂-Partikel unter unmittelbarer Eindotierung von Fluor direkt zu einem Quarzglasrohr verglast werden, oder anhand eines CVD-Abscheideverfahrens durch Hydrolyse oder Pyrolyse siliziumhaltiger Ausgangsverbindungen unter Aufbau eines SiO₂-Sootkörpers, der nachträglich mit Fluor dotiert und gesintert wird.

Auch die übrigen Einzelelemente, nämlich ein Außenmantelrohr aus dotiertem oder undotiertem Quarzglas zur Erzeugung der äußeren Mantelzone der Faser sowie der Kernstab zur Erzeugung der Kernzone und der inneren Mantelzone des Faser können in jeweils separaten Prozessen erzeugt und anschließend zur Herstellung der Faser in Form eines Ensembles koaxialer Bauteile zusammengestellt werden. Das koaxiale Ensemble wird anschließend zu einer Vorform kollabiert oder elongiert oder direkt zu einer Faser elongiert. Wird zunächst eine Vorform erzeugt, wird diese in einem separaten Verfahrensschritt zu der optischen Faser gezogen. Dabei oder vorab kann sie mit zusätzlichem Mantelmaterial versehen werden, beispielsweise durch Hinzufügen von weiterem Quarzglas in Rohrform oder durch Außenabscheideverfahren.

In einer Monomodefaser bewirkt die Ringzone aus fluordotiertem Quarzglas mit einem geringeren Brechungsindex als das Mantelglas eine zusätzliche Führung der Lichtmode. Um den Modenfelddurchmesser gegenüber einer Standard-Monomodefaser nicht zu stark zu verändern, ist die Ringzone etwas vom Kern entfernt, also von diesem durch eine innere Mantelglaszone getrennt. Damit bewirkt die Ringzone eine Verringerung der Verluste bei Faserbiegung gegenüber einer Standardfaser ohne Ringzone, ohne die Kompatibilität zu Standard-Monomodefasern zu beeinträchtigen. Dies ist wichtig, wenn biegeunempfindliche Fasern mit Ringzone mit Standardfasern verbunden werden.

Wesentlich ist, dass das fluordotierte Ringzonenrohr beim Ausbilden einer Kontaktfläche zum Kernstab über seine Wandung ein radiales Fluorkonzentrationsprofil aufweist, das zur Rohr-Innenoberfläche hin abfällt. Es hat sich gezeigt, dass dadurch die Bildung von Blasen an der Grenzfläche zum Kernstab beim Elongierprozess wesentlich verringert wird. Der Bereich geringer Fluor-Konzentration im Randbereich des Ringzonenrohrs wird im Folgenden auch als "Fluor-Verarmungsschicht" bezeichnet.

Die Dotierung mit Fluor bewirkt eine Absenkung der Brechzahl des Quarzglases der Ringzone. Im Hinblick auf eine hohe Biegeunempfindlichkeit der optischen Faser sind eine hohe Fluor-Konzentration und ein steiler Brechzahlsprung zwischen Kernstab und Ringzone vorteilhaft. Der Fluorgehalt wird daher auf mindestens 6000 Gew.-ppm eingestellt und kann bis zu 15.000 Gew.-ppm betragen. Die durch die Fluordotierung bewirkte Brechzahlabsenkung gegenüber undotiertem Quarzglas beträgt mindestens 2x10⁻⁴ gegenüber dem Brechungsindex von undotiertem Quarzglas.

Andererseits steigt jedoch das Problem der Blasigkeit an den Grenzflächen mit zunehmendem mittleren Fluorgehalt des Ringzonenrohres. Demnach macht sich der blasenmindernde Effekt der Fluor-Verarmungsschicht insbesondere bei hohen mittleren Fluorgehalten bemerkbar. Das erfindungsgemäße Verfahren macht sich somit bevorzugt bei Ringzonenrohren mit hohen mittleren Fluorgehalten von 6000 Gew.-ppm oder mehr bemerkbar. Als mittlerer Fluorgehalt des Ringzonenrohres wird diejenige Fluor-Konzentration verstanden, die sich durch spektroskopische Messung über die Rohrwandung ergibt. Die Fluor-Verarmungsschicht macht sich dabei wegen ihrer vergleichsweise geringen Dicke nicht nennenswert bemerkbar.

Die Dotierung mit Fluor bewirkt eine Absenkung der Brechzahl des Quarzglases der Ringzone. Wie oben erwähnt, ist für eine hohe Biegeunempfindlichkeit der optischen Faser ein steiler Brechzahlsprung zwischen Kernstab und Ringzone vorteilhaft. Fluor-Konzentrationsgradienten und damit radiale Brechzahlgradienten sind insoweit an und für sich unerwünscht. Überraschenderweise hat es sich aber gezeigt, dass Schichtdicken von weniger als 10 µm akzeptabel sind und einen geeigneten Kompromiss zwischen Biegeunempfindlichkeit der Faser und Qualität der Grenzfläche darstellen. Bei einer Schichtdicke von weniger als 1 µm ergibt sich jedoch kein nennenswerter Effekt hinsichtlich einer verminderten Blasenbildung.

Je geringer der Fluorgehalt in der Fluor-Verarmungsschicht ist, umso geringer ist das Problem der Blasenbildung an den Kontaktflächen zum Ringzonenrohr. Im Hinblick hierauf weist die Fluor-Verarmungsschicht in einem oberflächennahen Bereich mit einer Dicke von 1 µm einen Fluorgehalt vom 3000 Gew.-ppm oder weniger auf. Der besonders niedrige Fluorgehalt im oberflächennahen Bereich trägt wesentlich zu einer geringen Blasenbildung bei.

Als Fluor-Verarmungsschicht wird diejenige Schichtdicke definiert, die eine Fluor-konzentration aufweist, die weniger als 80 % der Maximalkonzentration an Fluor im Quarzglas des Ringzonenrohres aufweist. Ebenso wird der an Fluor verarmte oberflächennahe Bereich als diejenige Schichtdicke definiert, die eine Fluorkonzentration aufweist, die weniger als 80 % der Maximalkonzentration an Fluor im Quarzglas des Ringzonenrohres aufweist.

Entscheidend ist der Abfall des Fluor-Konzentrationsprofils in Richtung auf den Kernstab. Es hat sich jedoch als vorteilhaft erweisen, wenn das Ringzonenrohr mit einem radialen Fluor-Konzentrationsprofil über die Ringzonenrohr-Wandung versehen wird, das auch eine äußere Fluor-Verarmungsschicht aufweist, in der die Fluor-Konzentration zur Rohr-Außenoberfläche hin abfällt.

Dadurch ergibt sich auch an der Grenzfläche zwischen Ringzone und äußerer Mantelzone eine verminderte Blasenbildung. An die Abmessung der äußeren Fluor-Verarmungsschicht, an die Steilheit des Abfalls der Fluor-Konzentration und die Maximalkonzentration im oberflächennahen Bereich bestehen weniger strenge Anforderungen als bei der inneren Fluor-Verarmungsschicht. Die weiter oben für die innere Fluor-Verarmungsschicht bereits erläuterten Abmessungen, Profile und Konzentrationen sind jedenfalls für die äußere Fluor-Verarmungsschicht hinreichend.

Es hat sich als günstig erwiesen, wenn die Fluor-Verarmungsschicht eine Schichtdicke von weniger als 4 µm aufweist.

Schichtdicken von weniger als 4 µm ergeben einen besonders geeigneten Kompromiss zwischen Biegeunempfindlichkeit der Faser und Qualität ihrer inneren Grenzflächen zum Ringzonenrohr.

Das Ringzonenrohr wird vorzugsweise werkzeugfrei durch Ausziehen eines Mutterrohres aus einem mit Fluor dotierten Quarzglas unter Ausbildung von Fluor-Verarmungszonen an der Rohr-Innenoberfläche und an der Rohr-Außenoberfläche erzeugt.

Durch das Erhitzen des Mutterrohres und die damit einhergehende Ausdiffusion von Fluor aus den oberflächennahen Schichten ergibt sich jedoch in der Regel eine Verarmung an Fluor an der Innenoberfläche und an der Außenoberfläche, die zu einem flachen Konzentrationsgradienten. Durch Auswahl der Temperatur und der Heizdauer beim Ausziehen des Mutterrohres kann die Fluor-Ausdiffusion so eingestellt werden, dass sich eine an Fluor verarmte Schicht mit den oben genannten Abmessungen und Konzentrationsprofilen ergibt. Geeignete Temperatur/Heizdauer-Parameterpaare kann der Fachmann anhand weniger Versuche ermitteln.

Weitere Anhaltspunkte sind der Außendurchmesser des ausgezogenen Ringzonenrohres, der vorzugsweise im Bereich von 10 bis 50 % des Außendurchmessers des Mutterrohres liegt, typischerweise ergeben sich Außendurchmesser im Bereich von 30 bis 70 mm, und das Zylinderverhältnis von Außendurchmesser zu Innendurchmesser ist im Ringzonenrohr um 0,2 bis 0,8 kleiner als beim Mutterrohr.

Alternativ dazu wird das Ringzonenrohr nach seiner Erzeugung in einem separaten Verfahrensschritt erhitzt, um die Fluor-Verarmungsschicht mit der gewünschten Dicke und dem vorgegebenen Fluor-Konzentrationsprofil zu erzeugen. Auch beim Erhitzen des Ringzonenrohres ist durch Auswahl der Temperatur und der Heizdauer die Fluor-Ausdiffusion anhand weniger Versuche einzustellen.

Das Erhitzen des Mutterrohres beim Ausziehprozess beziehungsweise das Erhitzen des Ringzonenrohres erfolgt vorzugsweise mittels einer elektrischen Heizeinrichtung in wasserstofffreier Atmosphäre.

Dadurch wird der Eintrag von Hydroxylgruppen in die oberflächennahen Bereiche des Ringzonenrohres vermindert.

Ohne besondere Vorkehrungen kann sich nach dem Ausziehen des Mutterohres eine an Fluor verarmte Oberflächenschicht mit einer Dicke ergeben, die das Sollmaß übersteigt. Dieses Ergebnis kann auch beim Erhitzen des Ringzonenrohres zwecks Einstellung einer ausreichend dicken Fluor-Verarmungsschicht - auch absichtlich - herbeigeführt werden. Die überschüssige an Fluor verarmte Schichtstärke kann durch Abätzen mit Flusssäure oder einem gasförmigen Ätzmittel entfernt werden. In dem Zusammenhang hat es sich daher bewährt, mindestens die Rohr-Innenoberfläche des Ringzonenrohres nach dem Ausziehen des Mutterrohres oder beim Ausziehen teilweise abzutragen.

Durch den Abtrag der Innenoberfläche wird die Dicke der Fluor-Verarmungsschicht auf den vorgegebenen Sollwert reduziert und gleichzeitig wird eine saubere, möglichst fehlerfreie Oberfläche erzeugt. Das Abtragen erfolgt dabei vorzugsweise durch Gasphasenätzen, um eine Beladung des Quarzglases mit Wasser und Hydroxylgruppen zu vermeiden.

Die Dicke der an Fluor verarmten Oberflächenschicht kann nach dem Ausziehen des Mutterrohres oder nach dem Erhitzen des Ringzonenrohres 15 µm oder mehr betragen. Wichtig ist, dass beim anschließenden Abtragen der Innenoberfläche die Abtragtiefe geringer ist als diese vorab erzeugte an Fluor verarmte Oberflächenschicht, so dass ein Teil derselben als Fluor-Verarmungsschicht mit der gewünschten Soll-Stärke erhalten bleibt. Im Hinblick hierauf hat es sich als günstig erwiesen, wenn die Tiefe des Abtrags der Innenoberfläche im Bereich von 10 bis 70 % der ursprünglichen Dicke einer an Fluor verarmten Oberflächenschicht beträgt.

Je geringer der Fluorgehalt in der Fluor-Verarmungsschicht ist, umso geringer ist das Problem der Blasenbildung an den Kontaktflächen zum Ringzonenrohr. Im Hinblick hierauf hat es sich als günstig erwiesen, wenn die Fluor-Verarmungsschicht im besagten oberflächennahen Bereich einen Fluorgehalt von maximal 2000 Gew.-ppm aufweist. Ein geringer Fluorgehalt in der oberflächennahen Schicht mit einer Schichtdicke von 1 µm trägt wesentlich zu einer geringen Blasenbildung bei.

Es hat sich gezeigt, dass der Hydroxylgruppengehalt in Verbindung mit einem hohen Fluorgehalt zur Blasigkeit im Bereich der Kontaktflächen zum Ringzonenrohr beitragen kann. Daher wird eine Verfahrensweise bevorzugt, bei der das Quarzglas des Ringzonenrohres im Bereich der Fluor-Verarmungsschicht einen mittleren Hydroxylgruppengehalt von weniger als 1 Gew.-ppm und vorzugsweise von weniger als 0,5 Gew.-ppm aufweist

Ein geringer Hydroxylgruppengehalt in der Fluor-Verarmungsschicht wird beispielsweise erreicht, wenn das Erhitzen beim Elongieren eines Mutterrohres zum Ringzonenrohr oder das Erhitzen des Ringzonenrohres zur Ausbildung der Fluor-Verarmungsschicht in einer elektrischen Heizzone in wasserstofffreier Atmosphäre erfolgt.

Ein geringer Hydroxylgruppengehalt ist gleichermaßen im Bereich der anderen, mit dem Ringzonenrohr zusammenzufügenden Einzelelemente hilfreich, um Blasenbildung zu vermeiden. In dem Zusammenhang hat es sich als günstig erwiesen, wenn das Quarzglas der inneren Mantelzone von einem Kernstab bereitgestellt wird, der im Bereich einer Oberflächenschicht mit einer Schichtdicke von 10 µm einen Hydroxylgruppengehalt von weniger als 0,5 Gew.-ppm aufweist.

Dieser geringe Hydroxylgruppengehalt im oberflächennahen Bereich des Kernstabs wird beispielsweise erreicht, indem der Kernstab in einer elektrischen Heizzone elongiert wird, also keine wasserstoffhaltige Brennerflamme zum Flammenpolieren oder dergleichen eingesetzt wird.

Aus dem gleichen Grund ist es auch vorteilhaft, wenn das Quarzglas der äußeren Mantelzone von einem Außenmantelrohr bereitgestellt wird, das im Bereich seiner Innenoberfläche eine Oberflächenschicht aufweist, die in einer Schichtdicke von 10 µm einen Hydroxylgruppengehalt von weniger als 0,5 Gew.-ppm aufweist.

Das Außenmantelrohr besteht aus dotiertem oder undotiertem Quarzglas und wird vorzugsweise durch OVD-Sootaufbauverfahren und anschließendem dehydrieren in chlorhaltiger Atmosphäre und Sintern erzeugt, einschließlich einer mechanischen Bearbeitung und einem Ausziehen zu einem Mantelrohr.

Der geringe Hydroxylgruppengehalt im Bereich der Innenoberfläche des Außenmantelrohres wird auch dadurch ermöglicht, dass die Innenoberfläche des Außenmantelrohres durch mechanische Bearbeitung erzeugt wird.

Durch die mechanische Bearbeitung kann ein etwaiger erhöhter Hydroxylgruppengehalt im Oberflächenbereich abgetragen werden, ohne dabei neue Hydroxylgruppen einzudringen.

Das Erhitzen des Ringzonenrohres zur Herstellung der Fluor-Verarmungsschicht kann auch während des Elongierens des Ensembles aus Kohlenstoff, Ringzonenrohr und etwaigen weiteren Einzelteilen erfolgen. Hierbei sind die Länge der Heizzone und die Vorschubgeschwindigkeit des Ensembles durch die Heizzone zu beachten. Im Hinblick darauf hat es sich als günstig erwiesen, wenn der Quotient aus Heizzonenlänge (in mm) und Vorschubgeschwindigkeit des Mutterrohres (in mm/min) 10 min oder mehr beträgt.

Die Länge der Heizzone beträgt dabei mindestens 150 mm, und liegt typischerweise im Bereich von 180 bis 250 mm. Die Temperatur im Bereich der Oberfläche des Ringzonenrohres beträgt mindestens 2200° C.

Hinsichtlich des rohrförmigen Halbzeugs zur Herstellung einer optischen Faser wird die oben genannte Aufgabe erfindungsgemäß dadurch gelöst, dass es aus Quarzglas mit einem mittleren Fluorgehalt von mindestens 6000 Gew.-ppm besteht, und eine von einer Rohr-Innenoberfläche und einer Rohr-Außenoberfläche begrenzte Wandung aufweist, über der ein radiales Fluor-Konzentrationsprofil eingestellt ist, das eine innere Fluor-Verarmungsschicht mit einer Schichtdicke von mindestens 1 µm und maximal 10 µm aufweist, in der der Fluorgehalt zur Rohr-Innenoberfläche hin abfällt und in einem oberflächennahen Bereich mit einer Dicke von 1 µm maximal 3000 Gew.-ppm beträgt.

Das Halbzeug in Form eines mit Fluor dotierten Quarzglasrohres wird hier als "Ringzonenrohr" bezeichnet. Dieses wird entweder anhand eines so genannten POD-Verfahrens (Plasma Outside Deposition) erzeugt, bei dem SiO₂-Partikel synthetisch unter unmittelbarer Eindotierung von Fluor direkt zu einem Quarzglasrohr verglast werden, oder anhand eines CVD-Abscheideverfahrens durch Hydrolyse oder Pyrolyse siliziumhaltiger Ausgangsverbindungen unter Aufbau eines SiO₂-Sootkörpers, der nachträglich mit Fluor dotiert und gesintert wird.

Das Ringzonenrohr dient zur Herstellung einer optischen Faser mittels des oben beschriebenen Verfahrens und wird dabei in einem koaxialen Ensemble zusammen mit anderen Einzelelementen, umfassend ein Außenmantelrohr und einen Kernstab zu einer Vorform oder zu einer Faser verarbeitet. Dabei werden die Rohr-Innenoberfläche und die Rohr-Außenoberfläche erweicht und mit Quarzglas anderer Quarzglas-Einzelelemente verschmolzen. Aufgrund des Fluorgehalts des Ringzonenrohres kann es an den Kontaktflächen zu Blasenbildung kommen.

Um diesem Effekt entgegenzuwirken, weist das erfindungsgemäße Ringzonenrohr über seine Wandung ein radiales Fluor-Konzentrationsprofil auf, das mindestens zur Innenoberfläche hin abfällt. Dadurch wird die Bildung von Blasen an der Grenzfläche zum Kernstab beim Elongieren des Halbzeugs wesentlich verringert. Der Bereich geringerer Fluor-Konzentration im Randbereich des Ringzonenrohres wird als "Fluor-Verarmungsschicht" bezeichnet.

Die Dotierung mit Fluor bewirkt eine Absenkung der Brechzahl des Quarzglases der Ringzone. Im Hinblick auf eine hohe Biegeunempfindlichkeit der optischen Faser sind eine hohe Fluor-Konzentration und ein steiler Brechzahlsprung zwischen Kernstab und Ringzone vorteilhaft. Der Fluorgehalt des Ringzonenrohres beträgt daher mindestens 6000 Gew.-ppm, und der kann bis zu 15.000 Gew.-ppm betragen. Die durch die Fluordotierung bewirkte Brechzahlabsenkung gegenüber undotiertem Quarzglas beträgt mindestens 2x10⁻⁴ gegenüber dem Brechungsindex von undotiertem Quarzglas.

Andererseits steigt jedoch das Problem der Blasigkeit an den Grenzflächen mit zunehmendem mittleren Fluorgehalt des Ringzonenrohres. Demnach macht sich der blasenmindernde Effekt der Fluor-Verarmungsschicht insbesondere bei hohen mittleren Fluorgehalten bemerkbar. Das erfindungsgemäße Verfahren macht sich somit bevorzugt bei Ringzonenrohren mit hohen mittleren Fluorgehalten von 6000 Gew.-ppm oder mehr bemerkbar.

Die Dotierung mit Fluor bewirkt eine Absenkung der Brechzahl des Quarzglases der Ringzone. Wie oben erwähnt, ist für eine hohe Biegeunempfindlichkeit der optischen Faser ein steiler Brechzahlsprung zwischen Kernstab und Ringzone vorteilhaft. Fluor-Konzentrationsgradienten und damit radiale Brechzahlgradienten sind insoweit an und für sich unerwünscht. Schichtdicken von weniger als 10 µm sind jedoch akzeptabel und stellen einen geeigneten Kompromiss zwischen Biegeunempfindlichkeit der Faser und Qualität der Grenzfläche dar. Bei einer Schichtdicke von weniger als 1 µm ergibt sich jedoch kein nennenswerter Effekt hinsichtlich einer verminderten Blasenbildung.

Je geringer der Fluorgehalt in der Fluor-Verarmungsschicht ist, umso geringer ist das Problem der Blasenbildung an den Kontaktflächen zum Ringzonenrohr. Im Hinblick hierauf weist die Fluor-Verarmungsschicht in einem oberflächennahen Bereich mit einer Dicke von 1 µm einen Fluorgehalt vom 3000 Gew.-ppm oder weniger auf. Der besonders niedrige Fluorgehalt im oberflächennahen Bereich trägt wesentlich zu einer geringen Blasenbildung bei.

Die Fluor-Verarmungsschicht und der an Fluor verarmte oberflächennahe Bereich sind weiter oben anhand es erfindungsgemäßen Verfahrens definiert.

Vorteilhafte Ausgestaltungen des erfindungsgemäßen Halbzeugs ergeben sich aus den Unteransprüchen. Soweit in den Unteransprüchen angegebene Ausgestaltungen des Halbzeugs den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

Das Ringzonenrohr dient zur Herstellung einer optischen Faser. Hierzu wird es zusammen mit anderen Einzelelementen, umfassend ein Außenmantelrohr aus dotiertem oder undotiertem Quarzglas sowie einen Kernstab, die jeweils in separaten Prozessen erzeugt werden, in Form des Bauteil -Ensembles zusammengestellt. Dieses Ensemble wird anschließend zu einer Vorform oder direkt zu einer Faser verarbeitet. Wesentlich ist, dass das fluordotierte Ringzonenrohr über seine Wandung ein radiales Fluor-Konzentrationsprofil aufweist, das zur Innenoberfläche hin abfällt. Dadurch wird die Bildung von Blasen an der Grenzfläche zum Kernstab beim Elongieren des Halbzeugs wesentlich verringert.

Das Ringzonenrohr bewirkt in der daraus gezogenen optischen Faser eine höhlere Biegeunempfindlichkeit.

Der Kernstab ist vorzugsweise aus einer Vielzahl von Kernstabsegmenten zusammengesetzt, die stoßweise in axiale Richtung innerhalb des Ringzonenrohres angeordnet sind. Die Segmentierung des Kernstabs ermöglicht beliebig lange Kernstablängen.

Im Ensemble verbleibt zwischen dem Kernstab und dem Ringzonenrohr vorzugsweise ein Ringspalt mit einer Spaltweite im Bereich von vorzugsweise 0,5 bis 2 mm. Das Gleiche gilt für den Ringspalt zwischen dem Ringzonenrohr und dem Außenmantelrohr.

Das Verhältnis von Außendurchmesser zu Innendurchmesser des Ringzonenrohres liegt vorzugsweise im Bereich zwischen 1,4 und 1,8, bei einer bevorzugten Wandstärke zwischen 2 und 12 mm. Die Länge des Ringzonenrohres liegt typischerweise zwischen 1 und 3 m, wobei mehrere Ringzonenrohr-Abschnitte stoßweise aneinander geschweißt werden können.

### Ausführungsbeispiel

Nachfolgend wird die Erfindung anhand von Ausführungsbeispielen und einer Patentzeichnung näher erläutert. In der Zeichnung zeigt im Einzelnen:
- **Figur 1**: ein Diagramm mit radialen Konzentrationsprofilen von SiO₂ und Fluor im Bereich der Rohr-Außenoberfläche eines Ringzonenrohres, und
- **Figur 2**: ein Diagramm mit radialen Konzentrationsprofilen von SiO₂ und Fluor im Bereich der Rohr-Innenoberfläche eines Ringzonenrohres.

Anhand eines üblichen Sootabscheideverfahrens wird ein Sootkörper hergestellt und nachträglich mit Fluor dotiert.

Nach dem Verglasen des Sootkörpers wird ein Quarzglaszylinder mit einem Außendurchmesser von 200 mm, einem Innendurchmesser von 80 mm erhalten, so dass sich ein Verhältnis von Außendurchmesser zu Innendurchmesser von 2,5 ergibt. Das Quarzglas weist einen mittleren Hydroxylgruppengehalt von 0,1 Gew.-ppm und einen mittleren Fluorgehalt von 6100 Gew.-ppm auf, der eine Brechzahlabsenkung gegenüber undotiertem Quarzglas bewirkt.

Der Ausgangszylinder wird werkzeugfrei zu einem Ringzonenrohr mit einem Außendurchmesser von 38 mm, einem Innendurchmesser von 25 mm und einer Wandstärke von 6,5 mm ausgezogen.

Dabei wird der Ausgangszylinder in wässerstofffreier Stickstoffatmosphäre einer elektrischen Heizzone mit einer Temperatur von mindestens 2200° C und einer Länge "L" von 170 mm mit einer Vorschubgeschwindigkeit "v" von 10 mm/min zugeführt, so dass sich für den Quotienten L/v ein Wert von 10 min ergibt.

Das danach erhaltene Ringzonenrohr zeichnet sich durch eine durch Heißverformung geglättete Rohr-Innenoberfläche mit besonders hoher Oberflächengüte aus. Durch das Erhitzen beim Elongierprozess bildet sich im Bereich der Rohr-Innen- und -Außenoberflächen des Ringzonenrohres eine an Fluor verarmte Oberflächenschicht mit einer Dicke von etwa 5 µm.

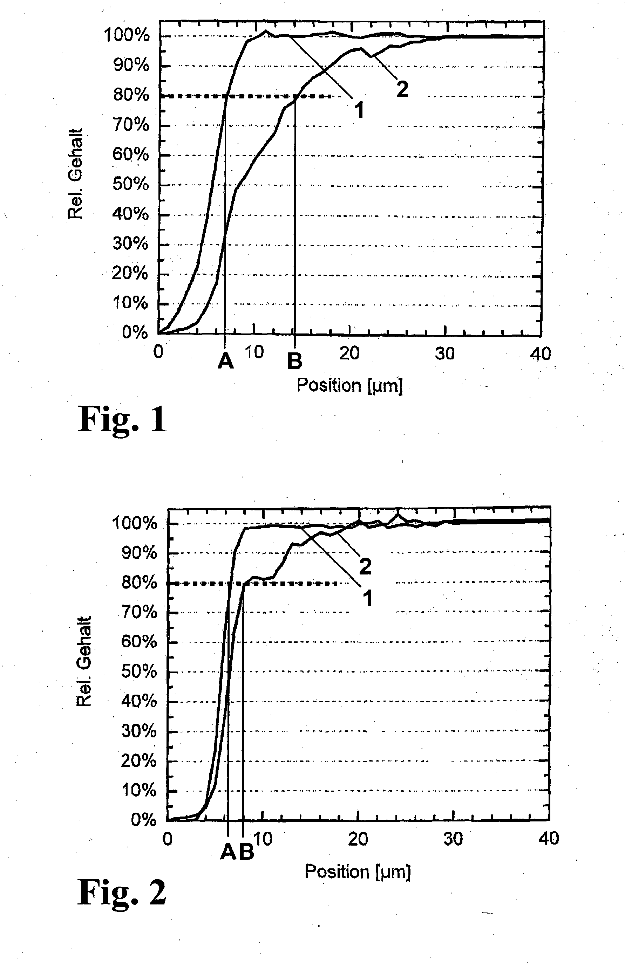

Das entsprechende Konzentrationsprofil im Bereich der Außenoberfläche zeigt Figur 1. Auf der Ordinate sind die Konzentrationen für Fluor (Kurve 2) und SiO₂ (Kurve 1) in relativen Einheiten aufgetragen (bezogen auf die jeweilige Maximalkonzentration an SiO₂ und Fluor) und auf der Abszisse die radiale Position in [µm]. Der allmähliche Anstieg der jeweiligen Konzentrationsprofile und der Versatz vom Nullpunkt sind bedingt durch die räumliche Auflösung der Messmethode.

Als "Fluor-Verarmungsschicht" wird diejenige Schichtdicke definiert, die eine Fluorkonzentration von weniger als 80% vom Maximalwert aufweist. Die dazu gehörige Position ist in Figur 1 mit "B" bezeichnet. Die Konzentration an SiO₂ stellt den Bezugspunkt (Nullpunkt) für den Positionswert dar. Der zum 80%-Konzentrationswert gehörige Nullpunkt für die Position ist in Figur 1 mit "A" bezeichnet. Die Schichtdicke für die Fluor-Verarmungsschicht ergibt sich somit aus dem Abstand A-B der Konzentrationsprofile von Fluor und SiO₂ beim 80%-Könzentrationswert. Im oberflächennahen Bereich bis 1 µm beträgt die Fluorkonzentration weniger als 2100 Gew.-ppm und die Dicke der an Fluor verarmten Oberflächenschicht insgesamt beträgt in diesem Fall etwa 7 µm. Sie ist für den Zylinderaußenmantel des Ringzonenrohres akzeptabel, jedoch nicht optimal für den Zylinderinnenmantel.

Daher wird die Innenoberfläche des Ringzonenrohres, das nach dem Elongieren eine ähnliche Fluor-Verarmungsschicht wie der Außenmantel aufweist, abgeätzt, indem ein heißer Gasstrom an Ätzgas (SF₆) durch die Innenbohrung geleitet wird. Die danach an der Innenwandung erhaltenen Konzentrationsprofile sind in Figur 2 dargestellt. Aus dem Vergleich der Konzentrationsprofile von SiO₂ (Kurve 2) und Fluor (Kurve 1) ist ersichtlich, dass infolge des Abtrags der Innenoberfläche die Stärke der Fluor-Verarmungsschicht auf den vorgegebenen Sollwert von etwa 1,5 µm eingestellt und gleichzeitig im oberflächennahen Bereich ein steilerer Konzentrationsverlauf erhalten wird. Durch das Ätzen wird eine saubere und fehlerfreie Oberfläche erzeugt. Auch hier wird als Fluor-Verarmungsschicht diejenige Schichtdicke definiert, die eine Fluorkonzentration aufweist, die weniger als 80 % der Maximalkonzentration an Fluor aufweist, und die durch den Positionsabstand A-B ablesbar ist. Der mittlere Fluorgehalt innerhalb der Fluor-Verarmungsschicht beträgt mehr als 3000 Gew.-ppm und innerhalb eines inneren, oberflächennahen Bereichs von 1 µm liegt er bei etwa 2800 Gew.-ppm.

Der mittlere Chlorgehalt des Ringzonenrohres beträgt 200 Gew.-ppm und der nominale Hydroxylgruppengehalt des Quarzglases des Ringzonenrohres beträgt zwar 0,1 Gew.-ppm. Infolge des Elongierprozesses wird er jedoch oberflächennah auf Maximalwerte von 5 Gew.-ppm oder mehr erhöht. Durch das anschließende Gasphasenätzen wird jedoch eine Schicht mit relativ hohem Hydroxylgruppengehalt abgetragen, so dass sich an der Oberfläche der Fluor-Verarmungsschicht - gemessen über eine Schichtdicke von 1 µm ein mittlerer Hydroxylgruppen von maximal 0,4 Gew.-ppm ergibt.

Das so erhaltene Ringzonenrohr wird zum Überfangen eines Kernstabs in einem Stab-in-Rohr-Verfahren eingesetzt. Hierfür werden aus dem Ringzonenrohr Teilstücke mit den gewünschten Längen abgelängt. Der Kernstab weist einen GeO₂-dotierten Kernbereich mit einem Radius von 12 mm auf und ist mit einem inneren Mantel aus undotiertem Quarzglas mit einer Schichtstärke von 5,5 mm umgeben.

Der Kernstab wird in die Innenbohrung des Ringzonenrohres eingesetzt und dieses wiederum mit einem Jacketrohr aus undotiertem Quarzglas mit dem Brechungsindex n_{Ma} umhüllt, das einen Außendurchmesser von 175 mm, einen Innendurchmesser von 40 mm und einen mittleren Chlorgehalt von 1800 Gew.-ppm aufweist.

Diese koaxiale Anordnung von Bauteilen wird anschließend in vertikaler Orientierung in einen Ziehofen eingebracht und darin mit dem unteren Ende beginnend zonenweise erweicht und aus dem erweichten Bereich eine Faser abgezogen. Dabei dienen die äußeren und inneren "Fluor-Verarmungsschichten" des Ringzonenrohres als "Passivierungsschichten", die die Ausdiffusion von Fluor vermindern und so eine Blasenbildung im Bereich der Grenzflächen verhindern. Auf diese Weise tragen die Fluor-Verarmungsschichten zu einer defektarmen Kontakt- und Grenzfläche zum Kernstab und zum Jacketrohr bei.

Es wird eine biegeunempfindliche optische Single-Mode-Faser mit einem Außendurchmesser von 125 µm gezogen, die sich durch eine Ringzone mit hoher Fluor-konzentration auszeichnet, und die einen Abstand zum Außenbereich der Kernzone aufweist. Für den radialen Verlauf des Brechungsindex des Ensembles gilt: n_{Ma} > n_{F} < n_{Mi} < n_{K}.

## Patentansprüche

1. Verfahren zur Herstellung einer optischen Faser durch Elongieren einer Quarzglas-Vorform oder eines koaxialen Ensembles von Quarzglas-Bauteilen, wobei die Faser eine Kernzone mit einem Brechungsindex n_{K}, eine die Kernzone umhüllende innere Mantelzone mit einem Brechungsindex n_{Mi}, eine die innere Mantelzone umgebende Ringzone aus einem dotierten Quarzglas mit einem Brechungsindex n_{F} sowie eine die Ringzone umgebende äußere Mantelzone aufweist, wobei gilt: n_{F} < n_{Mi} < n_{K}, **dadurch gekennzeichnet, dass** das Quarzglas der Ringzone in Form eines Ringzonenrohres aus Quarzglas mit einem mittleren Fluorgehalt von mindestens 6000 Gew.-ppm bereitgestellt wird, das eine von einer Rohr-Innenoberfläche und einer Rohr-Außenoberfläche begrenzte Wandung aufweist, wobei über die Ringzonenrohr-Wandung ein radiales Fluor-Konzentrationsprofil eingestellt wird, das eine innere Fluor-Verarmungsschicht mit einer Schichtdicke von mindestens 1 µm und maximal 10 µm aufweist, in der der Fluorgehalt zur Rohr-Innenoberfläche hin abfällt und in einem oberflächennahen Bereich mit einer Dicke von 1 µm maximal 3000 Gew.-ppm beträgt.

2. Verfahren nach Anspruch 1, **dadurch gekennzeichnet, dass** das Ringzonenrohr mit einem radialen Fluor-Konzentrationsprofil über die Ringzonenrohr-Wandung versehen wird, das eine äußere Fluor-Verarmungsschicht aufweist, in der die Fluor-Konzentration zur Rohr-Außenoberfläche hin abfällt.

3. Verfahren nach Anspruch 1 oder 2, **dadurch gekennzeichnet, dass** die innere Fluor-Verarmungsschicht eine Schichtdicke von weniger als 4 µm aufweist.

4. Verfahren nach einem der vorhergehenden Ansprüche, **dadurch gekennzeichnet, dass** das Ringzonenrohr werkzeugfrei durch Ausziehen eines Mutterrohres aus einem mit Fluor dotierten Quarzglas unter Ausbildung von Fluor-Verarmungszonen an der Innenoberfläche und an der Außenoberfläche erzeugt wird.

5. Verfahren nach Anspruch 3 oder 4, **dadurch gekennzeichnet, dass** mindestens die Rohr-Innenoberfläche des Ringzonenrohres nach dem Ausziehen oder beim Ausziehen des Mutterrohres teilweise abgetragen wird, und dass die Tiefe des Abtrags der Rohr-Innenoberfläche im Bereich von 10 bis 70 % der ursprünglichen Dicke einer an Fluor verarmten Oberflächenschicht beträgt.

6. Verfahren nach einem der vorhergehenden Ansprüche, **dadurch gekennzeichnet, dass** die Fluor-Verarmungsschicht im oberflächennahen Schicht mit einer Schichtdicke von 1 µm einen Fluorgehalt von maximal 2000 Gew.-ppm aufweist.

7. Verfahren nach einem der vorhergehenden Ansprüche, **dadurch gekennzeichnet, dass** das Quarzglas des Ringzonenrohres im Bereich der Fluor-Verarmungsschicht einen mittleren Hydroxylgruppengehalt von weniger als 1 Gew.-ppm und vorzugsweise von weniger als 0,5 Gew.-ppm aufweist.

8. Verfahren nach einem der vorhergehenden Ansprüche, **dadurch gekennzeichnet, dass** das Quarzglas der inneren Mantelzone von einem Kernstab bereitgestellt wird, der im Bereich einer Oberflächenschicht mit einer Schichtdicke von 10 µm einen Hydroxylgruppengehalt von weniger als 0,5 Gew.-ppm aufweist.

9. Rohrförmiges Halbzeug zur Herstellung einer optischen Faser, **dadurch gekennzeichnet, dass** es aus Quarzglas mit einem mittleren Fluorgehalt von mindestens 6000 Gew.-ppm besteht, und das eine von einer Rohr-Innenoberfläche und einer Rohr-Außenoberfläche begrenzte Wandung aufweist, über der ein radiales Fluor-Konzentrationsprofil eingestellt ist, das eine innere Fluor-Verarmungsschicht mit einer Schichtdicke von mindestens 1 µm und maximal 10 µm aufweist, in der der Fluorgehalt zur Rohr-Innenoberfläche hin abfällt und in einem oberflächennahen Bereich mit einer Dicke von 1 µm maximal 3000 Gew.-ppm beträgt.

10. Rohrförmiges Halbzeug nach Anspruch 9, **dadurch gekennzeichnet, dass** über der Ringzonenrohr-Wandung ein radiales Fluor-Konzentrationsprofil eingestellt ist, das eine äußere Fluor-Verarmungsschicht aufweist, in der die Fluor-Konzentration zur Rohr-Außenoberfläche hin abfällt.

11. Rohrförmiges Halbzeug nach Anspruch 9 oder 10, **dadurch gekennzeichnet, dass** die innere Fluor-Verarmungsschicht eine Schichtdicke von weniger als 4 µm aufweist.

12. Rohrförmiges Halbzeug nach einem der Ansprüche 9 bis 11, **dadurch gekennzeichnet, dass** das Ringzonenrohr eine werkzeugfrei im Schmelzfluss erzeugte Rohr-Innenoberfläche aufweist.

13. Rohrförmiges Halbzeug nach einem der Ansprüche 9 bis 12, **dadurch gekennzeichnet, dass** die Fluor-Verarmungsschicht im oberflächennahen Bereich mit einer Schichtdicke von 1 µm einen Fluorgehalt von maximal 2000, Gew.-ppm aufweist.

14. Rohrförmiges Halbzeug nach einem der Ansprüche 9 bis 13, **dadurch gekennzeichnet, dass** das Quarzglas des Ringzonenrohres im Bereich der Fluor-Verarmungsschicht einen mittleren Hydroxylgruppengehalt von weniger als 1 Gew.-ppm und vorzugsweise von weniger als 0,5 Gew.-ppm aufweist.

## Claims

1. A method for producing an optical fiber by elongating a quartz glass preform or a coaxial assembly of quartz glass components, said fiber comprising a core zone with a refractive index n_{K}, an inner cladding zone overcladding the core zone and having a refractive index n_{Mi}, a ring zone surrounding the inner cladding zone and consisting of doped quartz glass having a refractive index n_{F}, as well as an outer cladding zone surrounding the ring zone,
where: n_{F} < n_{Mi} < n_{K}, **characterized in that** the quartz glass of the ring zone is provided in the form of a ring zone tube consisting of quartz glass with a mean fluorine content of at least 6000 wt. ppm, said ring zone tube having a wall defined by an inner tube surface and an outer tube surface, a radial fluorine concentration profile being set over the ring zone tube wall, said profile having an inner fluorine depletion layer with a layer thickness of at least 1 µm and not more than 10 µm, the inner fluorine depletion layer having a fluorine content that decreases towards the inner tube surface and is not more than 3000 wt. ppm in a near-surface region with a thickness of 1 µm.

2. The method according to claim 1, **characterized in that** the ring zone tube is provided with a radial fluorine concentration profile over the ring zone tube wall, the profile has an outer fluorine depletion layer with a fluorine concentration that decreases towards the outer tube surface.

3. The method according to claim 1 or 2, **characterized in that** the inner fluorine depletion layer has a layer thickness of less than 4 µm.

4. The method according to any one of the preceding claims, **characterized in that** the ring zone tube is produced without tools by drawing a base tube from a fluorine-doped quartz glass while forming fluorine depletion zones on the inner surface and on the outer surface.

5. The method according to claim 3 or 4, **characterized in that** at least the inner tube surface of the ring zone tube is partly removed after drawing or during drawing of the base tube, and the removal depth of the inner tube surface is in a range of 10% to 70% of an original thickness of a fluorine-depleted surface layer.

6. The method according to any one of the preceding claims, **characterized in that** the fluorine depletion layer in a near-surface layer with a layer thickness of 1 µm has a fluorine content of not more than 2000 wt. ppm.

7. The method according to any one of the preceding claims, **characterized in that** the quartz glass of the ring zone tube in the area of the fluorine depletion layer has a mean hydroxyl-group content of less than 1 wt. ppm and preferably of less than 0.5 wt. ppm.

8. The method according to any one of the preceding claims, **characterized in that** the quartz glass of the inner cladding zone is provided by a core rod that in the area of a surface layer with a layer thickness of 10 µm has a hydroxyl group content of less than 0.5 wt. ppm.

9. A tubular semifinished product for producing an optical fiber, **characterized in that** said tubular product consists of quartz glass having a mean fluorine content of at least 6000 wt. ppm, and said tubular product having a wall with an inner tube surface and an outer tube surface, a radial fluorine concentration profile being set over said wall, wherein said wall has an inner fluorine depletion layer with a layer thickness of at least 1 µm and not more than 10 µm, and having a fluorine concentration that decreases towards the inner tube surface and is not more than 3000 wt. ppm in a near-surface region with a thickness of 1 µm.

10. The tubular semifinished product according to claim 9, **characterized in that** the radial fluorine concentration profile having an outer fluorine depletion layer in which the fluorine concentration is decreasing towards the outer tube surface is set over the wall of the ring zone tube.

11. The tubular semifinished product according to claim 9 or 10, **characterized in that** the inner fluorine depletion layer has a layer thickness of less than 4 µm.

12. The tubular semifinished product according to any one of claims 9 to 11, **characterized in that** the ring zone tube has an inner tube surface produced without tools in a melt flow.

13. The tubular semifinished product according to any one of claims 9 to 12, **characterized in that** the fluorine depletion layer in the near-surface region with a layer thickness of 1 µm has a fluorine content of not more than 2000 wt. ppm.

14. The tubular semifinished product according to any one of claims 9 to 13, **characterized in that** the quartz glass of the ring zone tube in the area of the fluorine depletion layer has a mean hydroxyl-group content of less than 1 wt. ppm and preferably less than 0.5 wt. ppm.

## Revendications

1. Procédé pour la fabrication d'une fibre optique par allongement d'une préforme en verre de quartz ou un ensemble coaxial de composants en verre de quartz, la dite fibre présentant une zone de noyau avec un indice de réfraction n_{K}, une zone d'enveloppe interne entourant la zone de noyau avec un indice de réfraction n_{MI}, une zone annulaire composée d'un verre de quartz dopé d'un indice de réfraction n_{F}, entourant la zone interne d'enveloppe, ainsi qu'une zone d'enveloppe externe entourant la zone annulaire, la formule étant : n_{F} < n_{MI}, < n_{K}, **caractérisé en ce que** le verre de quartz de la zone annulaire est préparé sous forme d'un tube annulaire en verre de quartz avec une teneur en fluor moyenne d'au moins 6000 ppm en poids, qui présente une paroi limitée par une surface interne de tube et une surface externe de tube, un profil radial de concentration de fluor ayant été réglé au-dessus de la paroi de tube de zone annulaire, lequel présente une couche interne d'appauvrissement de fluor d'une épaisseur d'au moins 1 µm et maximum 10 µm, dans laquelle la teneur en fluor chute en direction de la surface interne de tube, et s'élève maximum à 3000 ppm en poids dans une zone proche de la surface d'une épaisseur de 1 µm.

2. Procédé selon la revendication 1, **caractérisé en ce que** le tube de zone annulaire est doté d'un profil radial de concentration de fluor au-dessus de la paroi de tube de zone annulaire, lequel présente une couche externe d'appauvrissement de fluor, dans laquelle la concentration de fluor chute en direction de la surface externe de tube.

3. Procédé selon la revendication 1 ou 2, **caractérisé en ce que** la couche interne d'appauvrissement de fluor présente une épaisseur de couche inférieure à 4 µm.

4. Procédé selon l'une des revendications précédentes, **caractérisé en ce que** le tube de zone annulaire est produit sans outil par extraction d'un tube de base à partir d'un verre de quartz dopé au fluor en formant des zones d'appauvrissement de fluor sur la surface interne et la surface externe.

5. Procédé selon la revendication 3 ou 4, **caractérisé en ce qu'**au moins la surface interne de tube de zone annulaire est partiellement retirée après l'extraction ou pendant l'extraction du tube de base et **en ce que** la profondeur du retrait de la surface interne de tube est comprise entre 10 et 70 % de l'épaisseur initiale d'une couche de surface appauvrie en fluor.

6. Procédé selon l'une des revendications précédentes, **caractérisé en ce que** la couche d'appauvrissement en fluor présente une teneur maximale en fluor de 2000 ppm en poids dans la couche proche de la surface d'une épaisseur de 1 µm.

7. Procédé selon l'une des revendications précédentes, **caractérisé en ce que** le verre de quartz du tube de zone annulaire présente, à proximité de la couche d'appauvrissement de fluor, une teneur moyenne en groupes hydroxyles inférieure à 1 ppm en poids et de préférence inférieure à 0,5 ppm en poids.

8. Procédé selon l'une des revendications précédentes, **caractérisé en ce que** le verre de quartz de la zone interne d'enveloppe est préparé par une barre de coeur qui présente à proximité d'une couche de surface d'une épaisseur de couche de 10 µm une teneur en groupes hydroxyles inférieure à 0,5 ppm.

9. Produit semi-fini tubulaire pour la fabrication d'une fibre optique, **caractérisé en ce qu'**il se compose de verre de quartz d'une teneur en fluor moyenne d'au moins 6000 ppm en poids et qui présente une paroi limitée par une surface interne de tube et une surface externe de tube, au-dessus de laquelle est réglé un profil radial de concentration en fluor qui présente une couche d'appauvrissement interne d'une épaisseur de couche comprise entre au moins 1 µm et 10 µm maximum, dans laquelle la teneur en fluor chute en direction de la surface interne de tube et s'élève à maximum 3000 ppm en poids à proximité de la surface d'une épaisseur de 1 µm.

10. Produit semi-fini tubulaire selon la revendication 9, **caractérisé en ce que** un profil radial de concentration de fluor a été réglé au-dessus de la paroi de tube de zone annulaire, lequel présente une couche interne d'appauvrissement de fluor dans laquelle la teneur en fluor chute en direction de la surface interne de tube.

11. Produit semi-fini tubulaire selon la revendication 9 ou 10, **caractérisé en ce que** la couche d'appauvrissement en fluor présente une épaisseur inférieure à 4 µm.

12. Produit semi-fini tubulaire selon l'une des revendications 9 à 11, **caractérisé en ce que** le tube de zone annulaire présente une surface interne de tube produite sans outil dans la matière en fusion.

13. Produit semi-fini tubulaire selon l'une des revendications 9 à 11, **caractérisé en ce que** la couche d'appauvrissement en fluor présente à proximité de la surface d'une épaisseur de couche de 1 µm une teneur maximale en fluor de 2000 ppm en poids.

14. Produit semi-fini tubulaire selon l'une des revendications 9 à 13, **caractérisé en ce que** le verre de quartz du tube de zone annulaire présente à proximité de la couche d'appauvrissement une teneur moyenne en groupes hydroxyles inférieure à 1 ppm en poids, de préférence inférieure à 0,5 ppm en poids.
